# EUROPÄISCHE PATENTANMELDUNG

(11) **EP 1 722 257 A1**
(43) Veröffentlichungstag der Anmeldung: **15.11.2006**
(21) Anmeldenummer: 06009476.0
(22) Anmeldetag: 09.05.2006
(51) Int. Cl.: G02B 6/32, G02B 6/36

(54) **Linsenarray**

(30) Priorität: 10.05.2005 DE 102005022326
(71) Anmelder: BLZ BAYERISCHES LASERZENTRUM GEMEINNÜTZIGE FORSCHUNGSGES. MBH, 91052 Erlangen (DE); Schleifring und Apparatebau GmbH, 82256 Fürstenfeldbruck (DE)
(72) Erfinder: Popp, Gregor, 80636 München (DE); Stark, Markus, Dr., 96135 Waizendorf (DE)
(74) Vertreter: Hübner, Gerd

(57) **Zusammenfassung**

Beschrieben wird eine mikrooptische Komponente umfassend wenigstens eine Trägerplatte (1) aus einem optischen Medium, auf die wenigstens eine Linse (4a, 4b) zur Ankopplung von Lichtwellenleitern fixiert ist.

## Beschreibung

### Technisches Gebiet

Die Erfindung betrifft ein integriertes optisches Element mit mehreren Linsen.

### Stand der Technik

Zur Ankopplung von Lichtwellenleitern, insbesondere in Form von Glasfasern an planare Lichtwellenleiter oder auch an optische Elemente, wie beispielsweise Laserdioden oder Fotodioden sind integrierte optische Elemente bekannt.

In der US 5,286,338 ist ein Verfahren zur Herstellung von Mikrolinsen-Arrays offenbart. Mit derartigen Verfahren können insbesondere kleinste Linsen in hoher Präzision hergestellt werden. Derartige Linsen sind besonders vorteilhaft zur Ankopplung von Singlemode-Fasexn geeignet, da hier die benötigten Linsendurchmesser deutlich unter einem Millimeter liegen. Bei der Herstellung von Linsen für Multimode-Fasern hat die hier bekannte Technologie den Nachteil hoher Fertigungstoleranzen.

### Darstellung der Erfindung

Der Erfindung liegt die Aufgabe zugrunde, dem Stand der Technik entsprechende integrierte optische Elemente derart weiterzubilden, dass mit einer Einheit Lichtwellenleiter sowohl als Singlemode-Fasern als auch Multimode-Fasern angekoppelt werden können.

Erfindungsgemäße Lösungen dieser Aufgabe sind in den unabhängigen Patentansprüchen angegeben. Weiterbildungen der Erfindung sind Gegenstand der abhängigen Ansprüche.

Ein erfindungsgemäßes integriertes optisches Element weist nun wenigstens eine Trägerplatte aus einem optischen Material auf, auf welche wenigstens eine, vorzugsweise aber mehrere Linsen befestigt sind. Mögliche Befestigungsverfahren sind Kleben, Laserstrahlschweißen, Lichtbogenschweißen, Löten und Bonden oder ein Klemmen.

Durch das Befestigen, bzw. Aufkleben der Linsen sind diese in exakt definierten Positionen fixiert. Die Justierung kann beispielsweise durch einen Positionierautomaten oder auch durch mechanische Vorrichtungen erfolgen.

Durch die erfindungsgemäße Ausgestaltung ist es nun möglich, eine Vielzahl von Linsen für Multimode-Lichtwellenleiter mit geringem Aufwand in eine einzige Einheit zu integrieren. Da die Linsen in der Herstellung bereits mit genau definierten, minimalen Toleranzen auf der Trägerplatte befestigt werden können, ist bei der Endmontage nur noch eine Justage der Trägerplatte mitsamt der Linsen als eine Einheit notwendig. Ebenso bzw. alternativ können auch die einzelnen Lichtwellenleiter, vorzugsweise in Ferrulen, auf der Trägerplatte justiert befestigt werden. Damit entfällt die Justage einer Vielzahl von einzelnen Linsen bzw. Lichtwellenleitern, bei der Endmontage. Durch die Anordnung auf einer Trägerplatte ergibt sich eine höchst robuste und Platz sparende Ausführungsfbrm.

Da mit den bisher bekannten Verfahren zur Herstellung mikrooptischer Komponenten beziehungsweise Systeme nur optische Komponenten kleiner Dimensionen, wie sie beispielsweise für Singlemode-Lichtwellenleiter geeignet sind, herstellbar sind, bietet die Erfindung eine wirtschaftliche Alternative zur Herstellung von Kollimatoren mit größeren Linsen, welche auch für Multimode- Lichtwellenleiter geeignet sind.

Durch das flächige Aufkleben von Linsen, deren Unterseite planar ist, können diese mit sehr geringer Toleranz auf einer Trägerplatte (Wafer) befestigt und exakt zur Oberfläche ausgerichtet werden. Weiterhin können beliebige unterschiedliche Fasertypen miteinander kombiniert werden.

Alternativ bzw. zusätzlich können auch Linsen ohne eine planare Fläche, beispielsweise kugelförmige Linsen in V-Nuten, pyramidenförmige Vertiefungen oder andere Mikrostrukturen eingesetzt werden. Diese Strukturen können vorzugsweise mit Kleber oder einem anderen Material, beispielsweise auf Glasbasis, polymerer, metallischer oder keramischer Basis gefüllt werden.

In einer weiteren vorteilhaften Ausgestaltung der Erfindung besteht wenigstens eine Trägerplatte aus Glas oder einem anderen Material, das für die jeweilige "Wellenlänge transparent ist (z. B. Polymer, Keramik, Halbleiter).

Eine andere vorteilhafte Ausgestaltung der Erfindung weist eine Trägerplatte auf, welche als planparallele Platte ausgeführt ist. An Stelle einer planparallelen Platte kann auch eine Platte mit zwei in einen Winkel zueinander verlaufenden Begrenzungsflächen verwendet werden. Hierdurch können die Reflexionen an der Auskoppelstelle verringert werden.

Die Dicke einer planparallelen Platte ist vorteilhafterweise derart dimensioniert, dass die Enden der daran befestigten Lichtwellenleiter (Fasern) in einem definierten Abstand zu den Linsen liegen.

Eine weitere vorteilhafte Ausgestaltung der Erfindung sieht vor, dass wenigstens eine, vorzugsweise aber mehrere Linsen zur automatischen Bestückung, vorzugsweise durch einen SMD-Bestückungsautomaten, aber auch durch ein Handlingssystem für Mikrooptik konfiguriert sind. Hierzu weisen die Linsen eine Form auf, welche von einem Bestückungskopf gut aufgegriffen werden kann. Weiterhin ist es vorteilhaft, wenn die Linsen hierzu in einem standardisierten Magazin, oder aber auch in Bestückuhgsgurten, wie sie zur Aufnahme von elektronischen Bauelementen verwendet werden, konfektioniert sind. Weiterhin kann durch einen Klebstoff-Dispenser am Bestückungsautomaten der Kleber an die gewünschte Position auf der Glasplatte auf oder durch einen statischen Dispenser auf die Linse aufgebracht werden. Die Positioniergenauigkeit der heute verfügbaren Bestückungsautomaten liegt in einer Größenordnung von 30 µm und ist damit ausreichend zur Bestückung von Linsen für die Anpassung von Multi-mode-Fasern mit Durchmessern von 50 µm/125 µm bzw. 62,5 µm/125 µm.

Alternativ können die Linsen auch durch eine Form zur Positionierung der Linsen aufgebracht werden. Die mit Klebstoff beschichteten Linsen können dann beispielsweise mit Hilfe der Form auf die Glasplatte gepresst werden. Alternativ können diese auch durch die Form positioniert lose auf die Glasplatte aufgelegt werden. In diesem Falle würde dann durch die Oberflächenspannung eine parallele Ausrichtung zur Glasplattenoberfläche erfolgen.

In einer weiteren Ausgestaltung der Erfindung ist wenigstens ein - MLA auf der Oberfläche der Trägerplatte befestigt. Die Befestigung kann hier beispielsweise auch durch Aufkleben erfolgen. Unter dem Begriff MLA werden hier so genannte Mikrolinsen Azxays (Micro Lens Array) verstanden. Diese weisen in einer monolithischen Einheit vorzugsweise eine Vielzahl von Mikrolinsen auf. Sie entsprechen den in der, WO 01/98801 A2 definierten mikrooptischen Komponenten beziehungsweise Systemen. Durch diese Ausgestaltung der Erfindung ist es nun möglich, auf einer Trägerplatte sowohl mikrooptische Komponenten zur Ankopplung an Sinaglemode-Lichtwellenleiter als auch optische Komponenten (Linsen) zur Ankopplung von Multunode-Lichtwellenleiter zu kombinieren. Dadurch ist es nun mit wenig Aufwand möglich, Drehübertrager für mehrere Sorten von Lichtwellenleitern zu gestalten.

Eine weitere Ausgestaltung der Erfindung sieht vor, dass in einem fest vorgegebenen Raster abwechselnd Linsen und mikrooptische Komponenten auf der Trägerplatte angeordnet sind. Ein solches Raster kann, beispielsweise in hexagonaler Anordnung, derart gewählt werden, dass eine optimale Raumausnutzung erfolgt.

Eine weitere Erfindung entsprechend dem Oberbegriff des Anspruchs 1 sieht wenigstens ein MLA vor, bei dem einzelne Mikrolinsen für Single-mode-Fasern vorgesehen sind. Weiterhin sind zwischen diesen einzelnen Mikrolinsen Leerplätze zur Aufnahme von größeren Linsen, beispielsweise für Multimode-Fasern vorgesehen.

Eine weitere vorteilhafte Ausgestaltung der Erfindung sieht vor, dass in wenigstens einem MLA Strukturen zur Positionierung beziehungsweise Befestigung von Linsen eingebracht sind. Diese Strukturen sind mit dem gleichen Herstellungsprinzip, vorzugsweise monolithisch, wie die Mikrolinsen hergestellt. Die Strukturen können beispielsweise Erhebungen oder auch Vertiefungen sein. Durch die Strukturen können die Abstände der einzelnen Linsen in verschiedenen Achsen vorgegeben beziehungsweise festgelegt sein. Somit kann beispielsweise ein von der Brennweite der jeweiligen Linsen abhängiger Abstand in Längsrichtung zwischen Linse und Faser eingestellt werden.

Eine andere vorteilhafte Ausgestaltung der Erfindung sieht vor, dass mehrere lichtleitende Fasern in einer gemeinsamen Halterung gefasst sind.
Durch diese gemeinsame Fassung können diese dann auch gemeinsam poliert werden, so dass eine einheitliche, ebene Fläche entsteht. Diese kann nun an einer Glasplatte, beispielsweise durch Kleben befestigt werden. Hierzu können die gesamte Fläche oder auch nur bestimmte Bereiche mit Kleber beschichtet werden. Durch Strukturen auf der Oberfläche der Glasplatte kann ein Verlaufen des Klebers gezielt gesteuert werden. Hierbei können insbesondere die Bereiche um Fasern, durch welche hohe optische Leistungen übertragen werden, vom Klebstoff ausgespart werden. Dies lässt sich beispielsweise auch dadurch erreichen, dass die Fasern hoher Leistung in der Mitte eines Bündels aus einer Vielzahl von Fasern angeordnet sind, und der Klebstoff nur am Rand, im Bereich der äußeren Fasern aufgebracht wird. Diese Ausgestaltung lässt sich mit jeder der hier aufgeführten Erfindungen kombinieren.

In einer weiteren vorteilhaften Ausgestaltung der Erfindung sind die Linsen wahlweise, als sphärische Linsen, als asphärische Linsen oder auch als GRIN-Linsen ausgeführt. Eine GRIN-Linse kann ebenso wie eine sphärische oder eine asphärische Linse auf eine Trägerplatte oder ein MLA aufgebracht sein. Um eine höhere Festigkeit zu erreichen, können stabförmige Linsen, insbesondere GRIN-Linsen mit einer Ferrule versehen sein.

Eine andere Ausgestaltung der Erfindung sieht vor, dass in einer Anordnung entsprechend dem Anspruch 1 wenigstens zwei MLA in einem vorgegebenen Abstand zueinander fixiert sind. Hierbei kann der Zwischenraum vorzugsweise mit einem Medium gefüllt sein. Vorteilhaft ist ein Medium mit kleinerer Brechzahl als die Brechzahl der MLAs, zum Beispiel Luft oder auch ein Medium mit höherer Brechzahl wie zum Beispiel Öl.

Weiterhin betrifft die Erfindung ein Montageverfahren, bei dem zunächst Linsen 4 auf eine Trägerplatte 5 oder ein MLA 3 aufgebracht werden. In einem weiteren Schritt werden lichtleitende Fasern derart mit der Trägerplatte 5 oder dem MLA 3 derart in Verbindung gebracht, dass Strahlform und/oder Schielwinkel des aus dem Linsensystem (Kollimator) austretenden Lichts in einem vorgegebenen Toleranzbereich liegen. Diese beiden Schritte sind in ihrer Reihenfolge auch vertauschbar. In einem weiteren Schritt erfolgt eine Endmontage zum Zusammenbau der gesamten Vorrichtung mit dem derotierenden Element. Hierbei ist nur noch ein einfacher Montageschritt zur Justierung der beiden Subsysteme (Kollimatoren) zueinander notwendig.

### Beschreibung der Zeichnungen

Die Erfindung wird nachstehend ohne Beschränkung des allgemeinen Erfmdungsgedankens anhand von Ausführungsbeispielen unter Bezugnahme auf die Zeichnungen exemplarisch beschrieben.

Fig. 1 zeigt in allgemeiner Form schematisch eine erfindungsgemäße Anordnung.

In Figur 2 ist eine Anordnung aus Figur 1 in seitlicher Ansicht dargestellt.

In Figur 3 ist eine erfindungsgemäße Anordnung mit einem MLA dargestellt.

In Figur 4 ist eine weitere Ausgestaltung mit einem MLA mit erhabenen Strukturen dargestellt, wobei auf den erhabenen Strukturen kleine Linsen 4a vorgesehen sind.

In Figur 5 ist eine Ausgestaltung mit einem MLA mit erhabenen Strukturen dargestellt, wobei auf den erhabenen Strukturen große Linsen 4b angebracht sind.

In Figur 6 ist eine Ausgestaltung dargestellt, in der die Fasern 2 von einem Halter 5 gehalten werden.

In Figur 7 ist eine Vorrichtung mit GRIN-Liu'asen dargestellt.

In Figur 8 ist eine weitere Vorrichtung mit GRIN-Linsen dargestellt.

Figur 9 zeigt eine Korrelation eines MLA mit GRIN-Linsen.

Figur 10 zeigt eine erfindungsgemäße Vorrichtung mit einem MLA 3, an welchem ein Halter 9 für stabförmige Linsen angeordnet ist.

In Figur 11 ist eine erfindungsgemäße Vorrichtung mit zwei miteinander verbundenen MLA dargestellt.

Figur 12 zeigt eine Ausgestaltung mit zwei miteinander verbundenen MLA, wobei der Hohlraum zwischen den MLA mit einem Medium einer Brechzahl kleiner als der Brechzahl eines MLA gefüllt ist.

Figur 13 zeigt eine Ausgestaltung mit zwei miteinander verbundenen MLA, wobei der Hohlraum zwischen den MLA mit einem Medium einer Brechzahl größer als der Brechzahl eines MLA gefüllt ist.

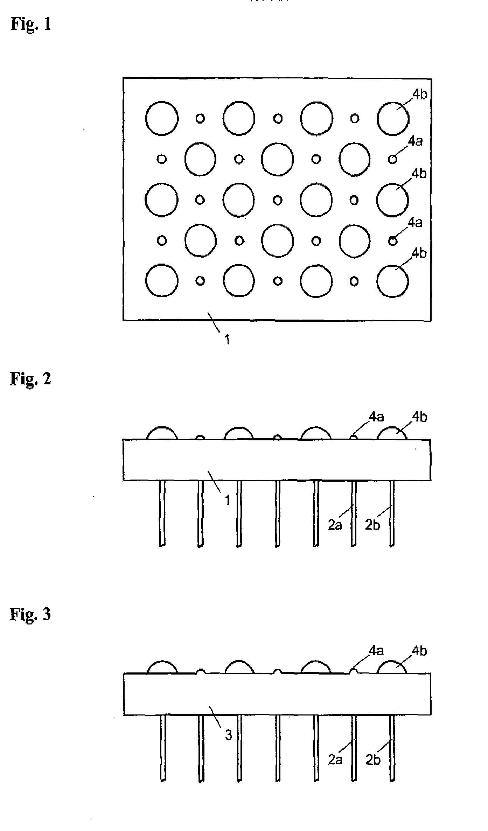

Fig.1. zeigt in schematischer Form eine erfindungsgemäße Anordnung in der Draufsicht. Hierbei sind auf einer Trägerplatte 1 in einem vorgegebenen Raster abwechselnd große Linsen 4b sowie kleine Linsen 4a angeordnet. Die großen Linsen könnten beispielsweise zur Übertragung der Signale aus Multimode-Fasern dienen, während die kleinen Linsen für die Übertragung der Signale aus Singlemode-Fasern ausgelegt sind.

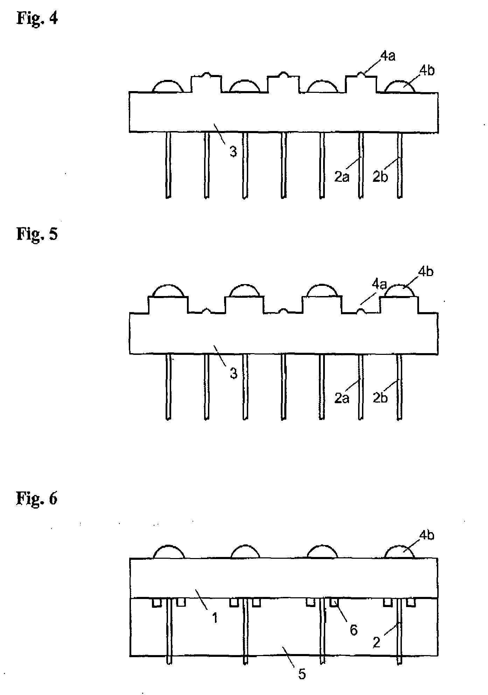

In Figur 2 ist eine Anordnung aus Figur 1 in seitlicher Ansicht dargestellt. Hierbei sind auch die Linsen unterschiedlicher Größen 4a und 4b gut zu erkennen. Die Zuführung beziehungsweise Abführung optischer Signale erfolgt durch lichtleitende Fasern (Lichtwellenleiter), wobei hier verschiedene Fasern, beispielsweise Singlemode-Fasern 2a in Verbindung mit kleinen Linsen und Multimode-Fasern 2b in Verbindung mit großen Linsen dargestellt sind.

In Figur 3 ist eine erfindungsgemäße Anordnung mit einem MLA dargestellt. Das MLA 3 (Mikrolinsen Array) weist auf seiner Oberfläche eine integrierte Struktur der kleinen Linsen 4a, beispielsweise für Singlemode-Fasern auf. Zwischen den kleinen Linsen sind große Linsen 4b, beispielsweise für Multimode-Fasern angebracht, vorzugsweise aufgeklebt.

In Figur 4 ist eine weitere Ausgestaltung mit einem MLA mit erhabenen Strukturen dargestellt, wobei auf den erhabenen Strukturen kleine Linsen 4a vorgesehen sind. Durch die Höhe der Struktur kann der Abstand der Linse, beispielsweise zur Faser definiert werden. Somit ist eine Einstellung des Abstandes in Abhängigkeit von der Brennweite der Linse möglich. Die kleinen Linsen 4a sind vorzugsweise mit in das MLA integriert.

In Figur 5 ist eine Ausgestaltung mit einem MLA mit erhabenen Strukturen dargestellt, wobei auf den erhabenen Strukturen große Linsen 4b angebracht sind. Diese Linsen sind hier vorzugsweise aufgeklebt. Auch hier kann durch die Strukturhöhe der Abstand zwischen Linse und Faser definiert werden.

In Figur 6 ist eine Ausgestaltung dargestellt, in der die Fasern 2 von einem Halter 5 gehalten werden. Der Halter 5 ist fest mit der Trägerplatte 1 verbunden. Um ein verlaufen des Klebers, mit dem die Fasern 2 mit der Trägerplatte 1 verklebt sind, zu verhindern, sind Stopvorrichtungen 6 für den Kleber vorgesehen. Wird grundsätzlich auf den Einsatz von Kleber verzichtet, so lassen sich noch höhere optische Leistungen übertragen. Der Einsatz von Kleber wird zunehmend unproblematischer, wenn der Strahl .. weiter aufgeweitet ist, also beispielsweise in der Nähe der Linsen.

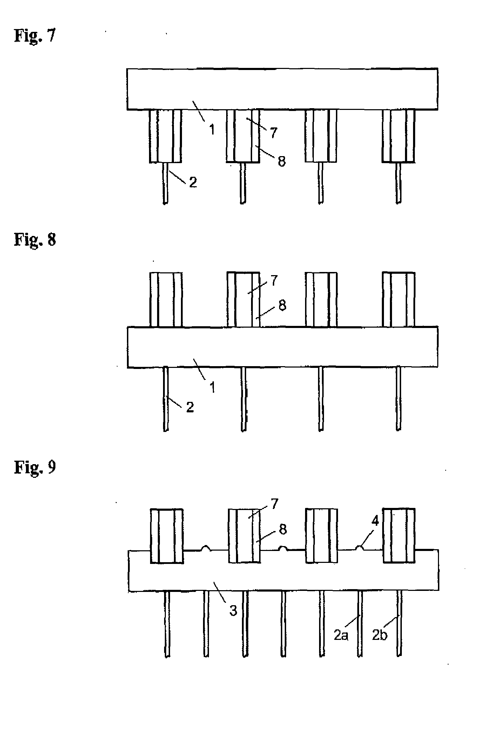

In Figur 7 ist eine Vorrichtung mit GRIN-Linsen dargestellt. Die GRIN-Linsen 7 sind hier vorzugsweise in einer Ferrule 8 gefasst, um die mechanische Stabilität zu erhöhen. Auf einer Seite der GRIN-Linsen sind die Fasern 2 befestigt. Die andere Seite der Linsen ist an der Trägerplatte 1 befestigt.

In Figur 8 ist eine weitere Vorrichtung mit GRIN-Linsen dargestellt. Hierbei sind die GRIN-Linsen auf der anderen Seite der Trägerplatte angeordnet.

Figur 9 zeigt eine Anordnung eines MLA mit GRIN-Linsen. Zur Anpassung des Abstandes der Faserenden zu den Linsen können im MLA Bohrungen vorgesehen sein, so dass die GRIN-Linsen vertieft in dieses eingebracht werden können. Durch diese Maßnahme lässt sich auch die mechanische Stabilität weiter erhöhen.

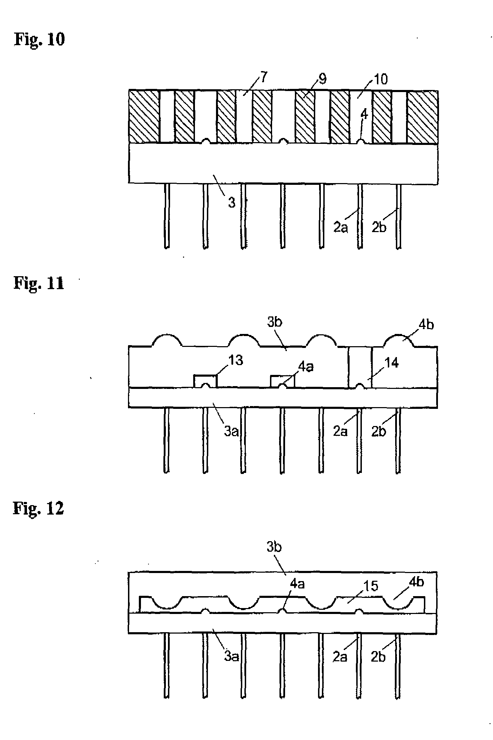

Figur 10 zeigt eine er-fmdungsgemäße Vorrichtung mit einem MLA 3, an welchem ein Halter 9 für stabförmige Linsen angeordnet ist. In dieser Darstellung ist der Halter 9 geschnitten gezeichnet. Izx den Nuten des Halters ist beispielsweise eine stabförmige Linse 7, wie eine Gffl-Linse aufgenommen. Um einen freien Durchtritt des Lichts aus den kleinen Linsen 4 zu ermöglichen, weist der Halter Lücken 10 auf.

In Figur 11 ist eine erfindungsgemäße Vorrichtung mit zwei miteinander verbundenen MLA dargestellt. Ein erstes MLA 3a weist kleine Linsen 4a auf. Das darüber angeordnete MLA 3b enthält große Linsen 4b, Weiterhin sind in diesem MLA Sacklochbohrungen 13 in einem Bereich über den Linsen des unteren MLA vorgesehen. Alternativ oder auch zusätzlich können Durchgangsbohrungen 14 über den Linsen des unteren MLA vorgesehen sein.

Figur 12 zeigt eine Ausgestaltung mit zwei miteinander verbundenen MLA, wobei der Hohlraum zwischen den MLA mit einem Medium einer Brechzahl kleiner als der Brechzahl eines MLA gefüllt ist. Auch hier sind die kleinen Linsen 4a, beispielsweise zur Ankopplung von Singlemode-Fasern 2a in dem unteren MLA 3a ausgebildet. Das darüber angeordnete MLA 3b weist größere Linsen 4b auf. Die Reihenfolge der Linsen entlang des Strahls kann auch umgekehrt sein, also zuerst Multi-Mode und dann Single-Mode. Der Grund hierfür ist die höhere Numerische Apertur der - Fasern und damit der Strahlaufweitung mit zunehmenden Abstand. Wobei gleichzeitig für Multi-Mode die Brennweiten der Linsen vorzugsweise größer gewählt werden.

Der Hohlraum zwischen den beiden MLA ist mit einem Medium gefüllt, dessen Brechzahl kleiner als die Brechzahl eines, oder beider MLA ist. Ein solches Medium ist beispielsweise Luft oder ein anderes Gas.

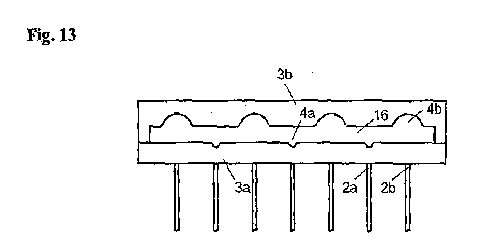

Figur 13 zeigt eine Ausgestaltung mit zwei miteinander verbundenen MLA, wobei der Hohlraum zwischen den MLA mit einem Medium einer Brechzahl größer als der Brechzahl eines MLA gefüllt ist. Auch hier sind die kleinen Linsen 4a, beispielsweise zur Ankopplung von Singlemode-Fasern 2a in dem unteren MLA 3a ausgebildet. Das darüber angeordnete MLA 3b weist größere Linsen 4b auf. Der Hohlraum zwischen den beiden MLA ist mit einem Medium gefüllt, dessen Brechzahl größer als die Brechzahl eines, oder beider MLA ist. Ein solches Medium ist beispielsweise Öl oder eine andere Flüssigkeit.

### Bezugszeichenliste

- 1: Trägerplatte
- 2: Lichtwellenleiter (Glas- oder Kunststofffaser)
- 3: MLA
- 4: Linse
- 5: Halter
- 6: Stoppvorrichtung für Kleber
- 7: Stabförmige Linse
- 8: Ferrule
- 9: Halter für stabförmige Linse
- 10: Lücke
- 13: Sacklochbohrung
- 14: Durchgangsbohrung
- 15: Medium kleiner Brechzahl
- 16: Medium großer Brechzahl
- 17: Linse

## Patentansprüche

1. Integriertes optisches Element, umfassend wenigstens eine Trägerplatte (1) aus einem optischen Medium sowie wenigstens eine mikrooptische Komponente,
**dadurch gekennzeichnet, dass**,
wenigstens eine Linse (4) zur vorzugsweisen Ankopplung von Lichtwellenleitern auf der wenigstens einen Trägerplatte (1) befestigt ist.

2. Vorrichtung nach Anspruch 1,
**dadurch gekennzeichnet dass**
wenigstens eine Trägerplatte (1) aus Glas, einem Polymer oder einem anderen für die interessierende Wellenlänge transparenten Material besteht.

3. Vorrichtung nach einem der vorhergehenden Ansprüche,
**dadurch gekennzeichnet, dass**
wenigstens eine Trägerplatte als planparallele Platte ausgeführt ist.

4. Vorrichtung nach einem der vorhergehenden Ansprüche,
**dadurch gekennzeichnet, dass**
wenigstens eine Trägerplatte ira Keilfonn ausgeführt ist, dass eine schräge Interfacefläche zwischen mindestens einem optischen Element und der Trägerplatte realisiert wird und somit ein Lichtbündel an der Im.terfacefläche mit einem Winkel derart ein- oder austritt, dass der reflektierte Anteil nicht in die Richtung gelenkt wird, aus der der Primärstrahl kommt.

5. Vorrichtung nach einem der vorhergehenden Ansprüche,
**dadurch gekennzeichnet, dass**
wenigstens eine Trägerplatte in Sägezahnform ausgeführt ist, dass eine schräge Interfacefläche zwischen mindestens einem optischen Element und der Trägerplatte realisiert wird und somit ein Lichtbündel an der Interfacefläche mit einem Winkel derart ein- oder austritt, dass der reflektierte Anteil nicht in die Richtung gelenkt wird, aus der der Primärstrahl kommt.

6. Vorrichtung nach einem der vorhergehenden Ansprüche,
**dadurch gekennzeichnet, dass**
die Dicke einer planparallelen, keilförmigen oder sägezahnförmigen Trägerplatte (1) vorteilhafterweise derart dimensioniert ist, dass die Enden der daran befestigten Lichtwellenleiter (2) in einem definierten Abstand zu den Linsen (4) liegen.

7. Vorrichtung nach einem der vorhergehenden Ansprüche,
**dadurch gekennzeichnet, dass**
wenigstens ein Teil der Linsen (4) zur automatischen Bestückung, vorzugsweise mit einem SMD-Bestückungsautomaten konfiguriert ist

8. Vorrichtung nach einem der vorhergehenden Ansprüche,
**dadurch gekennzeichnet, dass**
wenigstens ein MLA (3), welche in einem monolithischen Aufbau mehrere strahlführcnde bzw. Strahlformende oder auch mechanische Elemente vereint, auf wenigstens einer Trägerplatte (1) angebracht ist.

9. Vorrichtung nach Anspruch 5,
**dadurch gekennzeichnet, dass**
in einem fest vorgegebenen Raster abwechselnd Linsen (4) und/oder MLA (3) auf der Trägerplatte (1) angebracht sind.

10. Vorrichtung nach einem der vorhergehenden Ansprüche,
**dadurch gekennzeichnet, dass**
in wenigstens einem MLA (3) Strukturen zur Positionierung beziehungsweise Befestigung von Linsen (4) eingebracht sind.

11. Vorrichtung nach einem der vorhergehenden Ansprüche,
**dadurch gekennzeichnet, dass**
mehrere Lichtwellenleiter (2) in einer gemeinsamen Halterung gefasst sind und gemeinsam zu einer einheitlichen, ebenen Fläche poliert sind, so dass diese an einer Glasplatte befestigbar ist.

12. Vorrichtung nach einem der vorhergehenden Ansprüche,
**dadurch gekennzeichnet, dass**
wenigstens eine Linse (4) wahlweise, als sphärische Linse, als asphärische Linse oder auch als GRIN-Linsen ausgeführt ist.
